# EUROPEAN PATENT SPECIFICATION

(11) **EP 1 514 172 B1**
(45) Date of publication and mention of the grant of the patent: **05.04.2006**
(21) Application number: 03727825.6
(22) Date of filing: 21.05.2003
(51) Int. Cl.: G06F 5/06

(54) **SPACECAKE COPROCESSOR COMMUNICATION**
SPACECAKE COPROZESSOR KOMMUNIKATION
COMMUNICATION PAR COPROCESSEUR SPACECAKE

(30) Priority: 07.06.2002 EP 02077223
(43) Date of publication of application: 16.03.2005
(73) Proprietor: Koninklijke Philips Electronics, N.V., 5621 BA Eindhoven (NL)
(72) Inventor: HOOGERBRUGGE, Jan, NL-5656 AA Eindhoven (NL); STRAVERS, Paul, NL-5656 AA Eindhoven (NL)
(74) Representative: de Jong, Durk Jan
(86) International application number: PCT/IB2003/002282
(87) International publication number: WO 2003/104968

(56) References cited:
- EP-A- 0 273 083
- EP-A- 0 768 600
- GB-A- 2 291 230
- DWIVEDI B. K. ET AL: "Exploring Design Space of Parallel Realizations: MPEG-2 Decoder Case Study" PROCEEDINGS OF THE NINTH INTERNATIONAL SYMPOSIUM ON HARDWARE SOFTWARE CODESIGN, 2001. CODES 2001, 25 April 2001 (2001-04-25), pages 92-97, XP002303482 cited in the application
- STRAVERS P ET AL: "Homogeneous multiprocessing and the future of silicon design paradigms" IEEE, 18 April 2001 (2001-04-18), pages 184-187, XP010551424

## Description

The invention relates to a device and a method for writing data elements from a coprocessor into a FIFO, a device and method for reading data elements from a FIFO memory into a coprocessor as well as a multiprocessing computer system.

New applications and services like High Definition TV (HDTV), Broadcast Satellite Services, Video-conferencing, Interactive Storage Media etc. require a huge amount of data processing in the video domain as well as in the audio domain. Thus, the data rates involved in those applications make computation very time consuming.

When coping with the computing requirements in signal processing, designers usually follow two architectural approaches, namely the dedicated and the programmable approach. The dedicated architecture aims to fully exploit the computational features of algorithms. VLSI implementations of dedicated architecture are optimised with regard to area, power and performance. The advantage of a dedicated architecture is that they provide a good performance, while they lack the flexibility to further extend an algorithm set. On the other hand the programmable approach can satisfy the requirement for a greater flexibility, since algorithms can be further extended simply by applying the necessary software modifications. Due to the fact, that a number of applications can run on the hardware, the cost per application hardware is reduced. The disadvantage of a programmable architecture is that the architecture as well as application models must be faster, since the computational properties of algorithms are not fully exploited. This problem can be solved by implementing multiprocessing strategies. It is therefore essential to provide an application model which has sufficient parallelism in order to fully exploit the computational resources of a multiprocessor architecture. One such application model which provides parallelism for signal processing applications is the Kahn process network model. An significant increase in processing speed can be achieved as soon as the application are executed in a multiprocessor architecture.

A typical Kahn process network is composed of a number of process networks, processes and FIFO memories (First In - First Out). In such a process network a process is implemented by a processor or a coprocessor and a FIFO represents a communication channel, i.e. the processors communicate with each other via FIFO buffers. The FIFOs have a single reader and single writer. A process usually defines the functionality of the application. It interacts with its environment through input and output ports. A process can be in one of three states, namely running, blocked or ready. For example, a process will be blocked if it tries to read from an empty FIFO or if it tries to write into a full FIFO.

In the Kahn process network the processes communicate with each other in a pipelined manner, i.e. the slowest process in the pipeline determines its throughput. If the computation is properly balanced among processes if will reduce the effective parallelism within the application model.

Usually, processes communicate with each other via FIFOs. Now when these processes are implemented as software processes, an implementation of a FIFO includes a buffer for storing the data, a read pointer, a write pointer as well as room and data semaphores for synchronising data and room in the buffer. Therefore, writing into a FIFO is implemented firstly by waiting for free room, i.e. space, in said FIFO. When there is room available in said FIFO, data is input into the FIFO and the write pointer is incremented. Finally, it is signalled that valid data has been added into the FIFO. Reading from a FIFO is symmetrical to writing, i.e. the roles of room and data as well as the writer and reader pointer have changed.

An example of such a conventional system can be found in Stravers et al, "Homogeneous multiporocessing and the future of silicon design paradigms" IEEE, 18 April 2001, pages 184-187.

In a multiprocessing environment there is usually a conflict for the available communication resources, like buses etc.. The communication expenses increase as the number of processors in the architecture increases. Therefore optimising the application model with regard to a reduced communication will result in an improved speed. A reduced communication is achievable by carefully choosing the token structure and controlling the number of tokens transferred over the communication channels.

It is therefore an object of the invention to improve the communication between a coprocessor and a controller in a multiprocessing environment.

This object is solved by a device for writing data elements from a coprocessor into a FIFO memory according to claim 1, a method for writing data elements from a coprocessor into a FIFO memory according to claim 7, a device for reading data elements from a FIFO memory into a coprocessor according to claim 12, a method for reading data elements from a FIFO memory into a coprocessor according to claim 18, and a multiprocessing computer system according to claim 23.

The invention is based on the idea to maintain two counters for an input or output port of a FIFO.

According to the invention, a device for writing data elements from a coprocessor into a FIFO memory is provided. Said device is embedded in a multiprocessing environment comprising at least one coprocessor, a FIFO memory and a controller. Said device comprises a first counter for counting the available room in said FIFO memory, and a second counter for counting the number of data elements written into said FIFO memory. Said device further comprises a control means for checking said first counter for available room in said FIFO memory, and for checking said second counter whether a predetermined number N of data elements have been written into said FIFO memory. Said control means decrements the count of said first counter and increments the count of said second counter, after a data element has been written into said FIFO memory. Said device finally comprises an output means for outputting data elements to said FIFO memory. Said control means issues a first message when the count of said second counter has reached said predetermined number N and issues a first call for available room in said FIFO memory to said controller. Said output means forwards said first message and/or said first call to said controller.

The advantage of a writing device according to the invention is that by using said first and second counter for writing data into the FIFO memory there is no need for a coprocessor performing a write operation to request the controller for two semaphore operations (a P and a V operation) when writing to said FIFO, thereby reducing the communication traffic between coprocessor and controller.

According to an embodiment of the present invention said first message indicates that sufficient data elements have been written into said FIFO memory. Thus advantageously the communication traffic between coprocessor and controller is further reduced since said message is only transmitted after N data elements have been written into said FIFO.

According to a further embodiment of the present invention, said control means increments a write pointer, when data elements were output to said FIFO memory.

According to still a further embodiment of the present invention, said control means performs a wrap-around test after said write pointer was incremented.

According to an embodiment of the present invention, said control means resets said second counter after issuing said first message, i.e. the counter is reset after its count has reached N and said message has been issued so that the count can start again.

According to a further embodiment of the present invention, said control means issues said first call for available room in said FIFO memory to said controller before said count of said first counter becomes zero. This is advantageous since the latency of such a call is hidden.

The invention also concerns a method for writing data elements from a coprocessor to a FIFO. Said method corresponds to the device for writing data elements as described above.

Moreover, the invention also provides a device and method for reading data elements from a FIFO into a coprocessor. Said device and method are complementary to the writing device and writing method. Here, data is transferred from the FIFO to the coprocessor. Instead of the first message and first call, a second message indicating that sufficient data elements have been read from said FIFO, i.e. that room is available and a second call requesting available data elements in said FIFO, is issued.

According to the invention a multiprocessing computer system according to claim 23 is also provided. Furthermore, the invention also provides a computer program according to claim 24 for implementing said methods.

The invention will now be explained in more detail with reference to the drawing, in which:
Fig. 1 shows a block diagram of a multiprocessing computer system according to an embodiment of the invention,
Fig. 2 shows a block diagram of a writing device associated to coprocessors in Fig. 1, and
Fig. 3 shows a block diagram of a reading device associated to coprocessors in Fig. 1.

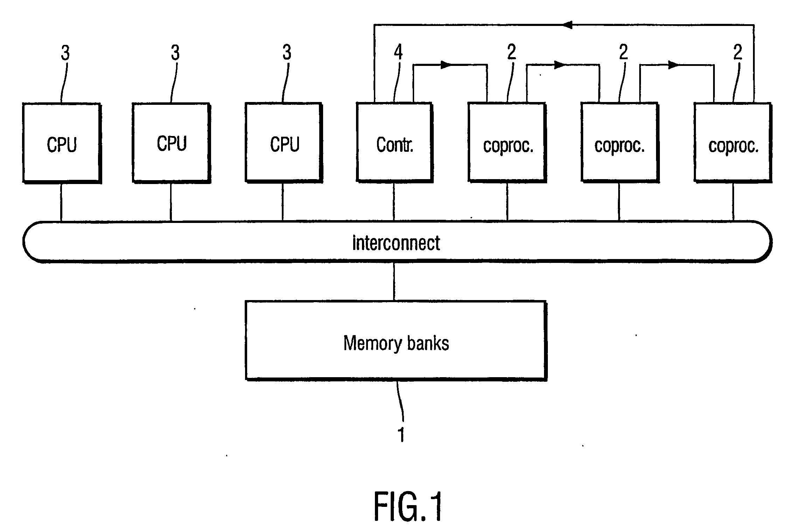

Fig. 1 shows a block diagram of a multiprocessing computer system according to an embodiment of the invention. Said computer system comprises memory banks 1, preferably in form of FIFO memories, three CPU's 3, three coprocessors 2, a controller 4 and an interconnect, like a bus, for connecting said FIFO memories with the CPU's 3, the coprocessors 2 and the controller 4. Said controller 4 is preferably embodied as a programmable processor executing semaphore operations on request of the coprocessors 2 and preferably communicates with the coprocessors 2 by means of a dedicated ring network. Part of the processes are implemented in software and run on a programmable processor, i.e. a CPU 3, while the other part of the processes are implemented in dedicated hardware and run on coprocessors 2. The memory 1 is shared between the processors 3 and the coprocessors 2 and is usually a random access memory.

For more details on this so called CAKE architecture please refer to "Exploring Design Space of Parallel Realizations: MPEG-2 Decoder Case Study", by Basant et al. in Proc. of CODES 2001, Copenhagen, April 2001, pp. 92-97.

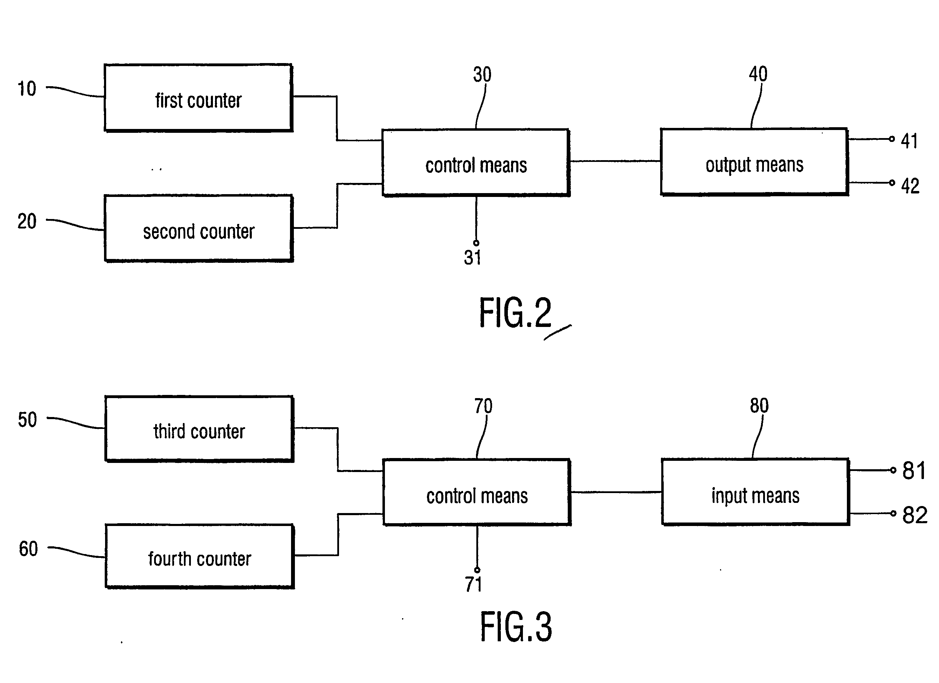

Fig. 2 shows a block diagram of a writing device associated to coprocessors 2 in Fig. 1. Said writing device comprises a first counter 10 and a second counter 20, a control means 30 and an output means 40, wherein said control means 30 is connected to said first and second counter 10, 20 and said output means 40, respectively. Said control means 30 has a terminal 31 to which a coprocessor 2 can be connected. Said output means 40 has a first terminal 41 connectable to said FIFO 1 and a second terminal 42 connectable to the controller 4, wherein said connection is preferably implemented via a dedicated ring network.

Said first counter 10 is used to count the available room in said FIFO 1, i.e. the count of said first counter 10 is room_available. It contains the number of free spaces in said FIFO 1, into which data can be written to before a call for free space or room need to be issued. Said second counter 20 is used to count the available data in said FIFO 1, i.e. the count of said second counter 20 is data_produced. It contains the number of data that has been written into the FIFO 1 but which have not been reported to the controller 4 yet.

First of all, the control means 30 checks the count of the first counter 10, i.e. the room_available counter 10. If the count of the first counter 10 is zero, the control means 30 issues a first call C1, i.e. a get_room call, to the controller 4 asking for room in the FIFO 1. If the controller 4 return a message that no room is currently available in the FIFO, the control means 30 repeats to issue a get_room call until the controller 4 returns that there is space available in the FIFO 1. When there is space available in said FIFO the output means 40 outputs data to the FIFO 1, where the data is stored. Next the control means 30 increments a write pointer and performs a pointer wrap-around test.

The wrap around test is performed by comparing the write/read pointer with a end-of-buffer address and if they equal each other, the write/read pointer is set to the begin-of-buffer address. Preferably the begin-of-buffer as well as the end-of-buffer addresses are stored in the coprocessor.

Thereafter, the control means 30 decrements the count of the first counter 10, i.e. the room_available counter, and increments the count of the second counter 20, i.e. the data_produced counter. The control means 30 determines whether the count of the second counter 20 has reached a predetermined number N, indicating that N data elements have been written into the FIFO and are hence available to be read from said FIFO 1. As soon as the count of the second counter 20 has reached the predetermined number N, the control means 30 issues a first message M1, i.e. put_data, to the controller 4. Alternatively, the put_data message may have an argument indicating how many data have been produced.

Fig. 3 shows a block diagram of a reading device associated to coprocessors 2 in Fig. 1. Said reading device comprises a third counter 50 and a fourth counter 60, a control means 70 and an input means 80, wherein said control means 70 is connected to said third and fourth counter 50, 60 and said input means 80, respectively. Said control means 70 has a terminal 71 to which a coprocessor 2 can be connected. Said input means 80 has a first terminal 81 connectable to said FIFO 1 and a second terminal 82 connectable to the controller 4, wherein said connection is preferably implemented via a dedicated ring network.

Said third counter 50 is used to count the available data in said FIFO 1, i.e. the count of said first counter 10 is data_available. It contains the number of free data elements in said FIFO 1 which can be read before a call for data need to be issued. Said fourth counter 60 is used to count the available free space or room in said FIFO 1, i.e. the count of said second counter 20 is room_produced. It contains the number of data that have been read from the FIFO buffer 1 but which have not been reported to the controller 4 yet.

First of all, the control means 70 checks the count of the third counter 50, i.e. the data_available counter. If the count of the third counter 50 is zero, the control means 70 issues a second call C2, i.e. a get_data call, to the controller 4 asking for data in the FIFO 1. If the controller 4 return a message that no data is currently available in the FIFO 1, the control means 70 repeats to issue a get_data call until the controller 4 returns that there is data available in the FIFO 1. When there is data available in said FIFO 1 the input means 80 inputs or reads data from the FIFO 1. Next the control means 70 increments a read pointer and performs a pointer wrap-around test.

Thereafter, the control means 70 decrements the count of the third counter 50, i.e. the data_available counter, and increments the count of the fourth counter 60, i.e. the room_produced counter. The control means 70 determines whether the count of the fourth counter 60 has reached a predetermined number N, indicating that N data elements have been read from the FIFO 1 and that hence there are spaces available into which data can be written to. As soon as the count of the fourth counter 60 has reached the predetermined number N, the control means 70 issues a second message M2, i.e. put_room, to the controller 4. Alternatively, the put_room message may have an argument indicating how many data has been produced.

Accordingly, the controller 4 implemented as a programmable processor must be able to accept a get_room call and a put_data message from the control means 30 of the writing device as well as a get_data call and a put_room message from the control means 70 of the reading device. When the controller 4 receives a get_room call, it resets the value of a corresponding room semaphore to zero and returns the previous value of the room semaphore. This value is then returned to the coprocessor 2 or its associated writing device which issued the get_room call. When the controller 4 receives the put_data message from a writing device associated to a coprocessor 2, it increments the data semaphore by a specific value. This value may the predetermined value N or alternatively the argument of the put_data message.

The implantation of the reaction of the controller 4 towards the get_data call and the put_room message is similar to the implementations of the get_room call and the put_data message. When the controller 4 receives a get_data call, it resets the value of a corresponding data semaphore to zero and returns the previous value of the data semaphore. This value is then returned to the coprocessor 2 or its associated reading device which issued the get_data call. When the controller 4 receives the put_room message from a reading device associated to a coprocessor 2, it increments the room semaphore by a specific value. This value may the predetermined value N or alternatively the argument of the put_room message.

The above described communication scheme can be improved by issuing a get_data or get_room call requesting data or room in the FIFO 1 before the first counter 10, i.e. data_available counter, or the third counter 50, i.e. the room_available counter, have become zero. This improvement will hide the latency of the get_data/get_room calls.

As controller 4 a low-end MIPS PR 1910 processor can be used.

As mentioned above processes may be implemented either on a programmable processor or on a dedicated coprocessor. The choice between those two alternatives is the classical hardware/software co-design question. Preferably, in the FIFO communication protocol buffer access, pointer increments and pointer wrap-around tests are implemented in hardware, i.e. dedicated coprocessors, while semaphore operations are implemented in software. It is desirable to perform semaphore operations in software, i.e. the processes are executed on the programmable processors, because of their complexity, e.g. waking up sleeping processes.

## Claims

1. Device for writing data elements from a coprocessor into a FIFO memory, in a multiprocessing environment comprising at least one coprocessor, a FIFO memory and a controller, said device comprising:
- a first counter for counting the available room in said FIFO memory;
- a second counter for counting the number of data elements written into said FIFO memory;
- control means for checking said first counter for available room in said FIFO memory, for checking said second counter whether a predetermined number N of data elements have been written into said FIFO memory, for decrementing the count of said first counter and for incrementing the count of said second counter after a data element has been written into said FIFO memory; and
- output means for outputting data elements to said FIFO memory;
wherein said control means is adapted to issue a first message when the count of said second counter has reached said predetermined number N;
wherein said control means is adapted to issue a first call for available room in said FIFO memory to said controller; and
wherein said output means is adapted to forward said first message and/or said first call to said controller.

2. Device according to claim 1, wherein
said first message indicates that sufficient data elements have been written into said FIFO memory.

3. Device according to claim 2, wherein
said control means is further adapted to increment a write pointer, when data elements were output to said FIFO memory.

4. Device according to claim 3, wherein
said control means is further adapted to perform a wrap-around test after said write pointer was incremented.

5. Device according to claim 2, wherein
said control means is adapted to reset said second counter after issuing said first message.

6. Device according to claim 1 or 2, wherein
said control means is adapted to issue said first call for available room in said FIFO memory to said controller before said count of said first counter becomes zero.

7. Method for writing data elements from a coprocessor into a FIFO memory being in a multiprocessing environment comprising at least one coprocessor, a FIFO memory and a controller, said method comprising the steps of:
- checking a first counter, indicating the available room in said FIFO memory, in order to determine whether there is room available in said FIFO memory,
- issuing a first call for available room in said FIFO memory to said controller until there is room in said FIFO memory;
- outputting data elements to said FIFO memory;
- decrementing the count of said first counter after a data element has been written into said FIFO memory;
- incrementing a second counter for counting the number of data elements written into said FIFO memory after a data element has been written into said FIFO memory;
- checking said second counter in order to determine whether a predetermined number N of data elements have been written into said FIFO memory; and
- issuing a first message that sufficient data elements have been written into said FIFO memory when the count of said second counter has reached said predetermined number N.

8. Method according to claim 7, further comprising to step of:
- incrementing a write pointer, when data elements were written into said FIFO memory.

9. Method according to claim 8, further comprising to step of:
- performing a wrap-around test after said write pointer was incremented.

10. Method according to claim 7, further comprising to step of:
- resetting said second counter after issuing said first message.

11. Method according to claim 7, further comprising to step of:
- issuing said first call for available room in said FIFO memory to said controller before said count of said first counter becomes zero.

12. Device for reading data elements from a FIFO memory into a coprocessor, in a multiprocessing environment comprising at least one coprocessor, a FIFO memory and a controller, said device comprising:
- a third counter for counting the available data elements in said FIFO memory;
- a fourth counter for counting the number of data elements read from said FIFO memory;
- control means for checking said third counter for available data element in said FIFO memory, for checking said fourth counter in order to determine whether a predetermined number N of data elements have been read from said FIFO memory, for decrementing the count of said third counter and for incrementing the count of said fourth counter after a data element has been read from said FIFO memory; and
- input means for inputting data elements from said FIFO memory;
wherein said control means is adapted to issue a second message when the count of said fourth counter has reached said predetermined number N;
wherein said control means is adapted to issue a second call for available data elements in said FIFO memory to said controller; and
wherein said output means is adapted to forward said second message and/or said second call to said controller.

13. Device according to claim 12, wherein
said second message indicates that sufficient data elements have been read from said FIFO memory.

14. Device according to claim 13, wherein
said control means is further adapted to increment a read pointer, when data elements were input from said FIFO memory.

15. Device according to claim 14, wherein
said control means is further adapted to perform a wrap-around test after said read pointer was incremented.

16. Device according to claim 13, wherein
said control means is adapted to reset said fourth counter after issuing said second message.

17. Device according to claim 13, wherein
said control means is adapted to issue said second call for available data elements in said FIFO memory to said controller before said count of said third counter becomes zero.

18. Method for reading data elements from a FIFO memory into a coprocessor being in a multiprocessing environment comprising at least one coprocessor, a FIFO memory and a controller, said method comprising the steps of:
- checking a third counter, indicating the available data elements in said FIFO memory, in order to determine whether there is data element available in said FIFO memory,
- issuing a second call for available data elements in said FIFO memory to said controller until there is data element in said FIFO memory;
- inputting data elements from said FIFO memory; decrementing the count of said third counter after a data element has been read from said FIFO memory;
- incrementing a fourth counter for counting the number of data elements read from said FIFO memory after a data element has been read from said FIFO memory;
- checking said fourth counter in order to determine whether a predetermined number N of data elements have been read from said FIFO memory; and
- issuing a second message that sufficient data elements have been read from said FIFO memory when the count of said fourth counter has reached said predetermined number N;

19. Method according to claim 18, further comprising to step of:
- incrementing a read pointer, when data elements were read from said FIFO memory.

20. Method according to claim 19, further comprising to step of:
- performing a wrap-around test after said read pointer was incremented.

21. Method according to claim 18, further comprising to step of:
- resetting said fourth counter after issuing said second message.

22. Method according to claim 18, further comprising to step of:
- issuing said second call for available data elements in said FIFO memory to said controller before said count of said third counter becomes zero.

23. Multiprocessing computer system, comprising:
- a FIFO memory;
- at least one coprocessor;
- a controller,
- a device for writing according to claims 1 to 6 and/or a device for reading according to claim 12 to 17.

24. Computer program comprising computer program code means for causing a computer to perform the steps of the method as claimed in claims 7 to 11 as well as the method as claimed in claims 18 to 22 when said computer program is run on a computer.

## Patentansprüche

1. Vorrichtung zum Schreiben von Datenelementen aus einem Koprozessor in einen FIFO-Speicher, in einer Umgebung mit Mehrprozessorbetrieb, die mindestens einen Koprozessor, einen FIFO-Speicher und eine Steuereinheit umfasst, wobei die Vorrichtung umfasst:
- einen ersten Zähler zum Zählen des verfügbaren Platzes in dem FIFO-Speicher;
- einen zweiten Zähler zum Zählen der Anzahl von Datenelementen, die in den FIFO-Speicher geschrieben wurden;
- Steuereinrichtungen zum Überprüfen des ersten Zählers auf verfügbaren Platz in dem FIFO-Speicher, zum Überprüfen des zweiten Zählers, ob eine vorbestimmte Anzahl N von Datenelementen in den FIFO-Speicher geschrieben worden sind, zum Dekrementieren der Zählung des ersten Zählers und zum Inkrementieren der Zählung des zweiten Zählers, nachdem ein Datenelement in den FIFO-Speicher geschrieben worden ist; und
- Ausgabeeinrichtungen zum Ausgeben von Datenelementen an den FIFO-Speicher;
wobei die Steuereinrichtungen eingerichtet sind, eine erste Mitteilung auszugeben, wenn die Zählung des zweiten Zählers die vorbestimmte Anzahl N erreicht hat;
wobei die Steuereinrichtungen eingerichtet sind, eine erste Anforderung nach verfügbarem Piatz in dem FIFO-Speicher an die Steuereinheit auszugeben; und
wobei die Ausgabeeinrichtungen eingerichtet sind, die erste Mitteilung und/oder die erste Anforderung an die Steuereinheit weiterzuleiten.

2. Vorrichtung nach Anspruch 1, wobei
die erste Mitteilung anzeigt, dass genügend Datenelemente in den FIFO-Speicher geschrieben worden sind.

3. Vorrichtung nach Anspruch 2, wobei
die Steuereinrichtungen des Weiteren eingerichtet sind, einen Schreibzeiger zu inkrementieren, wenn Datenelemente an den FIFO-Speicher ausgegeben wurden.

4. Vorrichtung nach Anspruch 3, wobei
die Steuereinrichtungen des Weiteren eingerichtet sind, nach dem Inkrementieren des Schreibzeigers einen Umlauftest durchzuführen.

5. Vorrichtung nach Anspruch 2, wobei
die Steuereinrichtungen eingerichtet sind, den zweiten Zähler nach dem Ausgeben der ersten Mitteilung zurückzusetzen.

6. Vorrichtung nach Anspruch 1 oder 2, wobei
die Steuereinrichtungen eingerichtet sind, eine erste Anforderung nach verfügbarem Platz in dem FIFO-Speicher an die Steuereinheit auszugeben, bevor die Zählung des ersten Zählers null erreicht.

7. Verfahren zum Schreiben von Datenelementen aus einem Koprozessor in einen FIFO-Speicher, der sich in einer Umgebung mit Mehrprozessorbetrieb befindet, die mindestens einen Koprozessor, einen FIFO-Speicher und eine Steuereinheit umfasst, wobei das Verfahren die folgenden Schritte umfasst:
- Überprüfen eines ersten Zählers, der den verfügbaren Platz in dem FIFO-Speicher anzeigt, um zu entscheiden, ob in dem FIFO-Speicher Platz verfügbar ist,
- Ausgeben einer ersten Anforderung nach verfügbarem Platz in dem FIFO-Speicher an die Steuereinheit bis in dem FIFO-Speicher Platz vorhanden ist;
- Ausgeben von Datenelementen an den FIFO-Speicher;
- Dekrementieren der Zählung des ersten Zählers, nachdem ein Datenelement in den FIFO-Speicher geschrieben worden ist;
- Inkrementieren eines zweiten Zählers zum Zählen der Anzahl von Datenelementen, die in den FIFO-Speicher geschrieben wurden, nachdem ein Datenelement in den FIFO-Speicher geschrieben worden ist;
- Überprüfen des zweiten Zählers, um zu entscheiden, ob eine vorbestimmte Anzahl N von Datenelementen in den FIFO-Speicher geschrieben worden ist; und
- Ausgeben einer ersten Mitteilung, dass genügend Datenelemente in den FIFO-Speicher geschrieben worden sind, wenn die Zählung des zweiten Zählers die vorbestimmte Anzahl N erreicht hat.

8. Verfahren nach Anspruch 7, des Weiteren den folgenden Schritt umfassend:
- Inkrementieren eines Schreibzeigers, wenn Datenelemente in den FIFO-Speicher geschrieben wurden.

9. Verfahren nach Anspruch 8, des Weiteren den folgenden Schritt umfassend:
- Durchführen eines Umlauftests, nachdem der Schreibzeiger inkrementiert wurde.

10. Verfahren nach Anspruch 7, des Weiteren den folgenden Schritt umfassend:
- Zurücksetzen des zweiten Zählers nach dem Ausgegeben der ersten Mitteilung.

11. Verfahren nach Anspruch 7, des Weiteren den folgenden Schritt umfassend:
- Ausgeben der ersten Anforderung nach verfügbarem Platz in dem FIFO-Speicher an die Steuereinheit, bevor die Zählung des ersten Zählers null erreicht.

12. Vorrichtung zum Lesen von Datenelementen aus einem FIFO-Speicher in einen Koprozessor, in einer Umgebung mit Mehrprozessorbetrieb, mindestens einen Koprozessor, einen FIFO-Speicher und eine Steuereinheit umfassend, wobei die Vorrichtung umfasst:
- einen dritten Zähler zum Zählen der verfügbaren Datenelemente in dem FIFO-Speicher;
- einen vierten Zähler zum Zählen der Anzahl von Datenelementen, die aus dem FIFO-Speicher gelesen wurden;
- Steuereinrichtungen zum Überprüfen des dritten Zählers für verfügbare Datenelemente in dem FIFO-Speicher, zum Überprüfen des vierten Zählers, um zu entscheiden, ob eine vorbestimmte Anzahl N von Datenelementen aus dem FIFO-Speicher gelesen worden sind, zum Dekrementieren der Zählung des dritten Zählers und zum Inkrementieren der Zählung des vierten Zählers, nachdem ein Datenelement aus dem FIFO-Speicher gelesen worden ist; und
- Eingabeeinrichtungen zum Eingeben von Datenelementen aus dem FIFO-Speicher;
wobei die Steuereinrichtungen eingerichtet sind, eine zweite Mitteilung auszugeben, wenn die Zählung des vierten Zählers die vorbestimmte Anzahl N erreicht hat;
wobei die Steuereinrichtungen eingerichtet sind, eine zweite Anforderung nach verfügbaren Datenelementen in dem FIFO-Speicher an die Steuereinheit auszugeben; und
wobei die Ausgabeeinrichtungen eingerichtet sind, die zweite Mitteilung und/oder die zweite Anforderung an die Steuereinheit weiterzuleiten.

13. Vorrichtung nach Anspruch 12, wobei
die zweite Mitteilung anzeigt, dass genügend Datenelemente aus dem FIFO-Speicher gelesen worden sind.

14. Vorrichtung nach Anspruch 13, wobei
die Steuereinrichtungen des Weiteren eingerichtet sind, einen Lesezeiger zu inkrementieren, wenn Datenelemente aus dem FIFO-Speicher eingegeben wurden.

15. Vorrichtung nach Anspruch 14, wobei
die Steuereinrichtungen des Weiteren eingerichtet sind, einen Umlauftest durchzuführen, nachdem der Lesezeiger inkrementiert wurde.

16. Vorrichtung nach Anspruch 13, wobei
die Steuereinrichtungen eingerichtet sind, den vierten Zähler nach dem Ausgeben der zweiten Mitteilung zurückzusetzen.

17. Vorrichtung nach Anspruch 13, wobei
die Steuereinrichtungen eingerichtet sind, die zweite Anforderung nach verfügbaren Datenelementen in dem FIFO-Speicher an die Steuereinheit auszugeben, bevor die Zählung des dritten Zählers null erreicht.

18. Verfahren zum Lesen von Datenelementen aus einem FIFO-Speicher in einen Koprozessor, der sich in einer Umgebung mit Mehrprozessorbetrieb befindet, mindestens einen Koprozessor, einen FIFO-Speicher und eine Steuereinheit umfassend, wobei das Verfahren die folgenden Schritte umfasst:
- Überprüfen eines dritten Zählers, der die verfügbaren Datenelemente in dem FIFO-Speicher anzeigt, um zu entscheiden, ob Datenelemente in dem FIFO-Speicher verfügbar sind;
- Ausgeben einer zweiten Anforderung nach verfügbaren Datenelementen in dem FIFO-Speicher an die Steuereinheit, bis ein Datenelement in dem FIFO-Speicher vorhanden ist;
- Eingeben von Datenelementen aus dem FIFO-Speicher;
- Dekrementieren der Zählung des dritten Zählers, nachdem ein Datenelement aus dem FIFO-Speicher gelesen worden ist;
- Inkrementieren eines vierten Zählers zum Zählen der Anzahl von Datenelementen, die aus dem FIFO-Speicher gelesen wurden, nachdem ein Datenelement aus dem FIFO-Speicher gelesen worden ist;
- Überprüfen des vierten Zählers, um zu entscheiden, ob eine vorbestimmte Anzahl N von Datenelementen aus dem FIFO-Speicher gelesen worden sind; und
- Ausgeben einer zweiten Mitteilung, dass genügend Datenelemente aus dem FIFO-Speicher gelesen worden sind, wenn die Zählung des vierten Zählers die vorbestimmte Anzahl N erreicht hat.

19. Verfahren nach Anspruch 18, des Weiteren den folgenden Schritt umfassend:
- Inkrementieren eines Lesezeigers, wenn Datenelemente aus dem FIFO-Speicher gelesen wurden.

20. Verfahren nach Anspruch 19, des Weiteren den folgenden Schritt umfassend:
- Durchführen eines Umlauftests, nachdem der Lesezeiger inkrementiert wurde.

21. Verfahren nach Anspruch 18, des Weiteren den folgenden Schritt umfassend:
- Zurücksetzen des vierten Zählers nach dem Ausgegeben der zweiten Mitteilung.

22. Verfahren nach Anspruch 18, des Weiteren den folgenden Schritt umfassend:
- Ausgeben der zweiten Anforderung nach verfügbaren Datenelementen in dem FIFO-Speicher an die Steuereinheit, bevor die Zählung des dritten Zählers null erreicht.

23. Computersystem mit Mchrprozessorbetrieb, umfassend:
- einen FIFO-Speicher;
- mindestens einen Koprozessor;
- eine Steuereinheit,
- eine Vorrichtung zum Schreiben nach den Ansprüchen 1 bis 6 und/oder eine Vorrichtung zum Lesen nach Anspruch 12 bis 17.

24. Computerprogramm, Computerprogrammcodeeinrichtungen umfassend, die einen Computer veranlassen, die Schritte des Verfahrens, wie in Ansprüchen 7 bis 11 beansprucht, als auch das in Ansprüchen 18 bis 22 beanspruchte Verfahren durchzuführen, wenn das Computerprogramm auf einem Computer läuft.

## Revendications

1. Dispositif pour écrire des éléments de données à partir d'un coprocesseur dans une mémoire FIFO, dans un environnement multitraitement comportant au moins un coprocesseur, une mémoire FIFO et un contrôleur, ledit dispositif comportant:
- un premier compteur pour compter la place disponible dans ladite mémoire FIFO;
- un deuxième compteur pour compter le nombre d'éléments de données écrites dans ladite mémoire FIFO;
- un moyen de contrôle pour vérifier ledit premier compteur pour de la place disponible dans ladite mémoire FIFO, pour vérifier ledit deuxième compteur qu'un nombre prédéterminé N d'éléments de données ont été écrits dans ladite mémoire FIFO, pour décrémenter le compte dudit premier compteur et pour décrémenter le compte dudit deuxième compteur après qu'un élément de données ait été écrit dans ladite mémoire FIFO; et
- un moyen de sortie pour fournir en sortie des éléments de données à ladite mémoire FIFO;
ledit moyen de contrôle étant adapté pour émettre un premier message quand le compte dudit deuxième compteur a atteint ledit nombre prédéterminé N;
ledit moyen de contrôle étant adapté pour émettre un premier appel pour de la place disponible dans ladite mémoire FIFO audit contrôleur; et
ledit moyen de sortie étant adapté pour transmettre ledit premier message et/ou ledit premier appel audit contrôleur.

2. Dispositif selon la revendication 1, dans lequel
ledit premier message indique que suffisamment d'éléments de données ont été écrits dans ladite mémoire FIFO.

3. Dispositif selon la revendication 2, dans lequel
ledit moyen de contrôle est en outre adapté pour incrémenter un pointeur d'écriture, quand des éléments de données ont été fournis en sortie à ladite mémoire FIFO.

4. Dispositif selon la revendication 3, dans lequel
ledit moyen de contrôle est en outre adapté pour effectuer un test de bouclage après que ledit pointeur d'écriture ait été incrémenté.

5. Dispositif selon la revendication 2, dans lequel
ledit moyen de contrôle est adapté pour réinitialiser ledit deuxième compteur après avoir émis ledit premier message.

6. Dispositif selon la revendication 1 ou 2, dans lequel
ledit moyen de contrôle est adapté pour émettre ledit premier appel pour de la place disponible dans ladite mémoire FIFO audit contrôleur avant que ledit compte dudit premier compteur ne devienne zéro.

7. Procédé pour écrire des éléments de données à partir d'un coprocesseur dans une mémoire FIFO en étant dans un environnement multitraitement comportant au moins un coprocesseur, une mémoire FIFO et un contrôleur, ledit procédé comportant les étapes de:
- vérification d'un premier compteur, indiquant la place disponible dans ladite mémoire FIFO, afin de déterminer s'il y a de la place disponible dans ladite mémoire FIFO,
- émission d'un premier appel pour de la place disponible dans ladite mémoire FIFO audit contrôleur jusqu'à ce qu'il y ait de la place dans ladite mémoire FIFO;
- fourniture en sortie des éléments de données à ladite mémoire FIFO;
- décrémentation du compte dudit premier compteur après qu'un élément de données ait été écrit dans ladite mémoire FIFO;
- incrémentation d'un deuxième compteur pour compter le nombre d'éléments de données écrits dans ladite mémoire FIFO après qu'un élément de données ait été écrit dans ladite mémoire FIFO;
- vérification dudit deuxième compteur afin de déterminer si un nombre prédéterminé N d'éléments de données ont été écrits dans ladite mémoire FIFO; et
- émission d'un premier message que suffisamment d'éléments de données ont été écrits dans ladite mémoire FIFO quand le compte dudit deuxième compteur a atteint ledit nombre prédéterminé N.

8. Procédé selon la revendication 7, comportant en outre l'étape de:
- incrémentation d'un pointeur d'écriture, quand des éléments de données ont été écrits dans ladite mémoire FIFO.

9. Procédé selon la revendication 8, comportant en outre l'étape de:
- exécution d'un test de bouclage après que ledit pointeur d'écriture ait été incrémenté.

10. Procédé selon la revendication 7, comportant en outre l'étape de:
- réinitialisation dudit deuxième compteur après l'émission dudit premier message.

11. Procédé selon la revendication 7, comportant en outre l'étape de:
- émission dudit premier appel pour de la place disponible dans ladite mémoire FIFO audit contrôleur avant que ledit compte dudit premier compteur ne devienne zéro.

12. Dispositif pour lire des éléments de données à partir d'une mémoire FIFO dans un coprocesseur, dans un environnement multitraitement comportant au moins un coprocesseur, une mémoire FIFO et un contrôleur, ledit dispositif comportant:
- un troisième compteur pour compter les éléments de données disponibles dans ladite mémoire FIFO;
- un quatrième compteur pour compter le nombre d'éléments de données lus à partir de ladite mémoire FIFO;
- un moyen de contrôle pour vérifier ledit troisième compteur pour un élément de données disponible dans ladite mémoire FIFO, pour vérifier ledit quatrième compteur afin de déterminer si un nombre prédéterminé N d'éléments de données ont été lus à partir de ladite mémoire FIFO, pour décrémenter le compte dudit troisième compteur et pour incrémenter le compte dudit quatrième compteur après qu'un élément de données ait été lu à partir de ladite mémoire FIFO; et
- un moyen d'entrée pour fournir en entrée des éléments de données à partir de ladite mémoire FIFO;
ledit moyen de contrôle étant adapté pour émettre un second message quand le compte dudit quatrième compteur a atteint ledit nombre prédéterminé N;
ledit moyen de contrôle étant adapté pour émettre un second appel pour des éléments de données disponibles dans ladite mémoire FIFO audit contrôleur; et
ledit moyen de sortie étant adapté pour transmettre ledit second message et/ou ledit second appel audit contrôleur.

13. Dispositif selon la revendication 12, dans lequel
ledit second message indique que suffisamment d'éléments de données ont été lus à partir de ladite mémoire FIFO.

14. Dispositif selon la revendication 13, dans lequel
ledit moyen de contrôle est en outre adapté pour incrémenter un pointeur de lecture, quand des éléments de données ont été fournis en entrée à partir de ladite mémoire FIFO.

15. Dispositif selon la revendication 14, dans lequel
ledit moyen de contrôle est en outre adapté pour effectuer un test de bouclage après que ledit pointeur de lecture ait été incrémenté.

16. Dispositif selon la revendication 13, dans lequel
ledit moyen de contrôle est adapté pour réinitialiser ledit quatrième compteur après avoir émis ledit second message.

17. Dispositif selon la revendication 13, dans lequel
ledit moyen de contrôle est adapté pour émettre ledit second appel pour des éléments disponibles dans ladite mémoire FIFO audit contrôleur avant que ledit compte dudit troisième compteur ne devienne zéro.

18. Procédé pour lire des éléments de données à partir d'une mémoire FIFO dans un coprocesseur en étant dans un environnement multitraitement comportant au moins un coprocesseur, une mémoire FIFO et un contrôleur, ledit procédé comportant les étapes de:
- vérification d'un troisième compteur, indiquant les éléments de données disponibles dans ladite mémoire FIFO, afin de déterminer s'il y a un élément de données disponible dans ladite mémoire FIFO,
- émission d'un second appel pour des éléments de données disponibles dans ladite mémoire FIFO audit contrôleur jusqu'à ce qu'il y ait un élément de données dans ladite mémoire FIFO;
- fourniture en entrée des éléments de données à partir de ladite mémoire FIFO;
- décrémentation du compte dudit troisième compteur après qu'un élément de données ait été lu à partir de ladite mémoire FIFO;
- incrémentation d'un quatrième compteur pour compter le nombre d'éléments de données lus à partir de ladite mémoire FIFO après qu'un élément de données ait été lu à partir de ladite mémoire FIFO;
- vérification dudit quatrième compteur afin de déterminer si un nombre prédéterminé N d'éléments de données ont été lus à partir de ladite mémoire FIFO; et
- émission d'un second message que suffisamment d'éléments de données ont été lus à partir ladite mémoire FIFO quand le compte dudit quatrième compteur a atteint ledit nombre prédéterminé N.

19. Procédé selon la revendication 18, comportant en outre l'étape de:
- incrémentation d'un pointeur de lecture, quand des éléments de données ont été lus à partir de ladite mémoire FIFO.

20. Procédé selon la revendication 19, comportant en outre l'étape de:
- exécution d'un test de bouclage après que ledit pointeur de lecture ait été incrémenté.

21. Procédé selon la revendication 18, comportant en outre l'étape de:
- réinitialisation dudit quatrième compteur après l'émission dudit second message.

22. Procédé selon la revendication 18, comportant en outre l'étape de:
- émission dudit second appel pour des éléments de données disponibles dans ladite mémoire FIFO audit contrôleur avant que ledit compte dudit troisième compteur ne devienne zéro.

23. Système d'ordinateur multitraitement, comportant:
- une mémoire FIFO;
- au moins un coprocesseur;
- un contrôleur,
- un dispositif d'écriture selon les revendications 1 à 6 et/ou un dispositif de lecture selon les revendications 12 à 17.

24. Programme informatique comportant des moyens en code de programme informatique pour faire en sorte que l'ordinateur exécute les étapes du procédé selon les revendications 7 à 11 ainsi que du procédé selon les revendications 18 à 22 quand ledit programme informatique est exécuté sur un ordinateur.
